# EUROPÄISCHE PATENTSCHRIFT

(11) **EP 0 769 090 B1**
(45) Veröffentlichungstag und Bekanntmachung des Hinweises auf die Patenterteilung: **17.12.1997**
(21) Anmeldenummer: 95921753.0
(22) Anmeldetag: 24.05.1995
(51) Int. Cl.: E04G 7/30, E04G 1/15

(54) **VERBINDUNGSHAKEN**
CONNECTION HOOK
CROCHET D'ASSEMBLAGE

(30) Priorität: 01.07.1994 DE 9410465 U
(43) Veröffentlichungstag der Anmeldung: 23.04.1997
(73) Patentinhaber: KRAUSE-WERK GMBH & CO. KG, D-36304 Alsfeld-Altenburg (DE)
(72) Erfinder: KRAUSE, Günther, D-36304 Alsfeld (DE)
(74) Vertreter: Missling, Arne, Dipl.-Ing.
(86) Internationale Anmeldenummer: EP9501973
(87) Internationale Veröffentlichungsnummer: WO9601352

(56) Entgegenhaltungen:
- DE-U- 9 314 353
- FR-A- 1 429 423
- FR-A- 2 083 214
- GB-A- 1 250 607
- US-A- 2 997 767

## Beschreibung

Die Erfindung betrifft einen Verbindungshaken zur lösbaren Verbindung zweier Bauelemente, wobei der an einem ersten Bauelement ortsfeste Verbindungshaken über ein profiliertes Bauteil eines zweiten Bauelementes auflegbar ist, dieses Bauteil teilweise überfangend und an diesem verriegelbar.

Verbindungshaken dieser Art sind insbesondere im Gerüstbau in großem Umfang erforderlich, um Gerüstrahmen, Belagbühnen, Holme, Verstrebungen und ähnliche Bauelemente miteinander sicher und schnell verbinden und wieder lösen zu können, insbesondere bei aus vorgefertigten Bauelementen bestehenden Baugerüsten. Während die Raumform des ersten Bauelementes an der Anschlußstelle für den Verbindungshaken relativ beliebig ist und eben nur dessen sichere Befestigung gewährleistet sein muß, ist das von dem Verbindungshaken überfangene Bauteil des zweiten Bauelementes, zumeist ein Querriegel oder eine kurze Konsole an einem Gerüstrahmen, mit einem stets gleichbleibenden, der Hakenöffnung des zughörigen Verbindungshakens angepaßten Querschnitt ausgeführt.

Die Erfindung hat sich die Aufgabe gestellt, derartige Verbindungshaken, die in sehr großen Stückzahlen benötigt werden, so zu gestalten, daß sie in der Grundausstattung aus einem Werkstück angefertigt werden, das in einem hochpro-duktiven Verfahren herstellbar ist, insbesondere im Strangpreßverfahren, und in einfacher Weise mit Bauteilen komplettierbar sind, die ihrerseits in großen Stückzahlen billig angefertigt werden können oder aus handelsüblichen Standardteilen bestehen.

Erfindungsgemäß wird die Aufgabe dadurch gelöst, daß der Verbindungshaken im Querschnitt als Hohlprofilstück ausgebildet ist, daß an dem Hohlprofilstück zwei flache, flächenparallele Stege vorgesehen sind, die, voneinander beabstandet, eine flache Sicherungsklinke einschließen, daß die Sicherungsklinke mit dem Bauteil in einen Formschluß bringbar ist, wenn sie zwischen den Stegen verschwenkt oder verschoben wird, den Querschnitt des Bauteiles in einer an den Stegen ausgebildeten Hakenöffnung arretierend, und daß die Stege durch mindestens einen Gurtstreifen verbunden sind und dieser so profiliert ist, daß er eine senkrecht auf dem Querschnitt des Hohlprofilstückes und den Flächen der Stege stehende Anlagefläche derart ausbildet, daß sie zur flanschartigen Befestigung des Verbindungshakens an dem ersten Bauelement geeignet ist.

Ein solcher Verbindungshaken kann aus quer zur Längsachse eines Strangpreßprofils ausgeschnitten Hohlprofilstücken sehr billig hergestellt werden, wobei die Stege auf ihrer dem Gurtstreifen gegenüberliegenden Seite unverbunden sein können, in der Regel aber auch dort miteinander verbunden sind, so daß das Hohlprofilstück einen geschlossenen Querschnitt aufweist. Die Anordnung erlaubt es, daß die Sicherungsklinke als einfaches Stanzteil ausgebildet ist; sie kann an einem einfachen, in den Stegen ortsfesten, aus einem handelsüblichen Bolzen bestehenden Achsschenkel schwenkbar sein. Alle für den Verbindungshaken erforderlichen Teile sind auf diese Weise billig herstellbar.

Der Verbindungshaken muß sicher und mit geringem Aufwand an dem ersten Bauelement starr befestigt werden. Dies wird erleichtert, wenn die Anlagefläche im wesentlichen eben gehalten und ferner so gestaltet ist, daß die Berandung der Anlagefläche mit dem ersten Bauelement verschweißbar ist, etwa, wenn sie die Anbringung einer Kehlschweißnaht ermöglicht. Eine ausreichende Schweißnahtlänge läßt sich erreichen, wenn die Anlagefläche im Querschnitt des Hohlprofilstückes als gegenüber dem übrigen Profil verbreiterte Gurtfläche erscheint.

Die Kopplung der beiden Bauelemente durch die Verbindungshaken ist in der Regel bereits außerordentlich stabil, weil die Verbindungshaken durch das Gewicht des ersten Bauelementes in ihrer Lage gehalten werden. Die Sicherheit der Verbindung wird verbessert, wenn der Formschluß der Sicherungsklinke mit dem Bauteil reibschlüssig arretierbar ist. Ein solcher Reibschluß ist leicht herstellbar, wenn die Sicherungsklinke um eine in den Stegen ortsfeste Achse schwenkbar ist, die der Längsachse des Bauteiles parallel ist, wobei in einer besonders vorteilhaften Ausführung an der Sicherungsklinke eine keilförmige Klinkenkante so ausgebildet ist, daß sie beim Verschwenken der Sicherungsklinke den Querschnitt des Bauteiles in der Hakenöffnung arretiert und in dieser Lage durch Keilwirkung einen Reibschluß zwischen der Klinkenkante und einer Basisfläche des Bauteiles erzeugt. Genausogut kann aber auch an der Sicherungsklinke ein kurzer Nocken so ausgebildet sein, daß die Sicherungsklinke beim Verschwenken den Querschnitt des Bauteiles in der Hakenöffnung arretiert und selbst in dieser Lage durch einen zwischen der Sicherungsklinke und der inneren Anlagefläche des Gurtstreifens einschlagbaren Keil reibschlüssig arretierbar ist. Es versteht sich, daß ein solcher Keil ausschlagbar angeordnet ist. Während die Verwendung einer mittels eines Keiles herbeigeführten Sicherung am besten geeignet ist, kurze Nocken oder dergleichen an dem Bauteil vorgesehene Formkanten von der Sicherungsklinke zu hinterfangen, sind die mit gegebenenfalls auch langen Klinkenkanten ausgerüsteten Sicherungsklinken dazu vorgesehen, das zu sperrende Bauteil in seinem ganzen Querschnitt in der Hakenöffnung zu fixieren. Die Betätigung der Sicherungsklinke kann auch hier durch Schläge mit einem geeigneten Werkzeug erfolgen, wenn an der Sicherungsklinke eine Schlagkante vorgesehen ist, an der die Sicherungsklinke in ihrer Schließrichtung antreibbar ist und insbesondere, wenn die Schlagkante an den Stegen des Verbindungshakens überständig ist, solange die Bauelemente noch unverbunden sind. Die Demontage erfolgt auch hier mittels Schlagwerkzeuges, wenn mindestens eine weitere Schlagkante an einem die Klinkenkante enthaltenden Klinkenbereich vorgesehen ist. Eine sichere Fixierung des Bauteiles wird insbesondere dadurch erreicht, daß an der Hakenöffnung eine der Sicherungsklinke gegenüberliegende kurze Haltekante vorgesehen ist, die einen weiteren Formschluß des Verbindungshakens mit dem Bauteil ausbildet, wenn dieses von der Hakenöffnung überfangen ist, so daß der Querschnitt des Bauteiles als Träger auf zwei Stützen ausgebildet und unverrückbar gehaltert ist. In gleicher Weise wirksam ist eine Anordnung, bei der die Form der Hakenöffnung der Form des Querschnitts des Bauteiles teilweise kongruent ist, nämlich in demjenigen Teil, der nur der Anlage, nicht aber der Durchführung des Bauteiles dient; der Effekt kann weiter verbessert werden, wenn die Hakenöffnung so bemessen ist, daß die kongruenten Konturen der Hakenöffnung und des Bauteiles mit einem leichten Preßsitz aneinanderliegen. Durch die Erfindung ist ein Verbindungshaken geschaffen, der bei Vorgabe einer billigen, hochautomatisierbaren Fertigung gleichwohl eine stabile und sichere Verbindung zweier Bauelemente herzustellen erlaubt und selbst bei sicherheitstechnisch besonders hochwertig auszuführenden Baugerüsten mit Erfolg einsetzbar ist. Die Erfindung wird nachstehend an Hand der Zeichnung an einem Ausführungsbeispiel näher erläutert. Es zeigen
- Fig. 1: einen erfindungsgemäßen Verbindungshaken in stereometrischer Darstellung,
- Fig. 2 und Fig. 3: den Verbindungshaken der Fig. 1 in einer Vorderansicht und einer Draufsicht, wobei in der Draufsicht die Sicherungsklinke weggelassen ist,
- Fig. 4: die Anordnung eines erfindungsgemäßen Verbindungshakens an einem ersten Bauelement,
- Fig. 5: ein zu dem erfindungsgemäßen Verbindungshaken passendes Bauteil eines zweiten Bauelemtes im Querschnitt und
- Fig. 6: eine gegenüber den Fig. 1 bis 3 etwas abgeänderte Ausführung eines Verbindungshakens,
sämtlich in schematisch vereinfachter Darstellung.

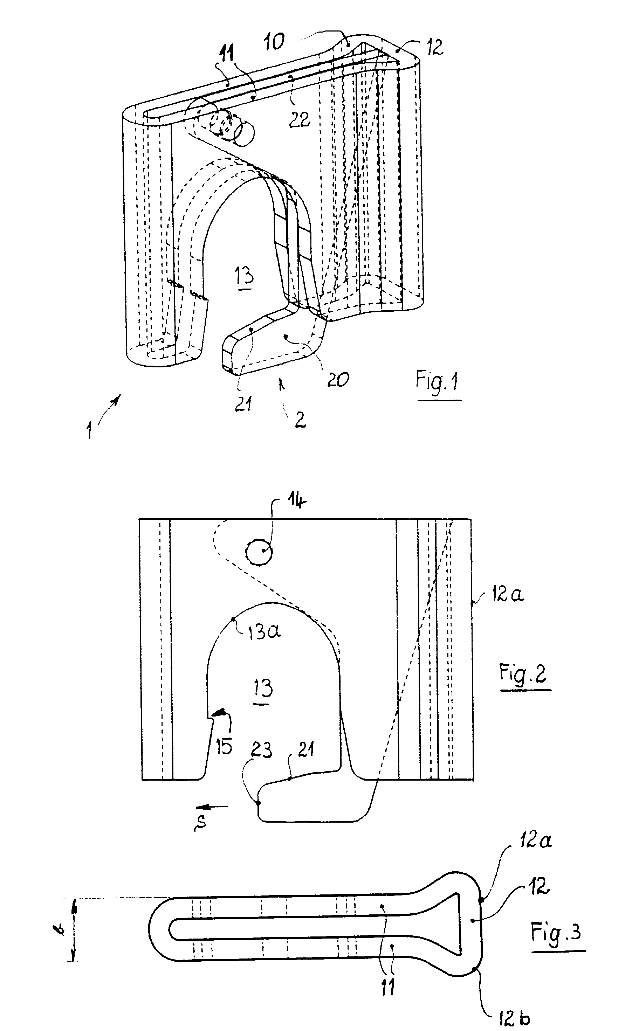

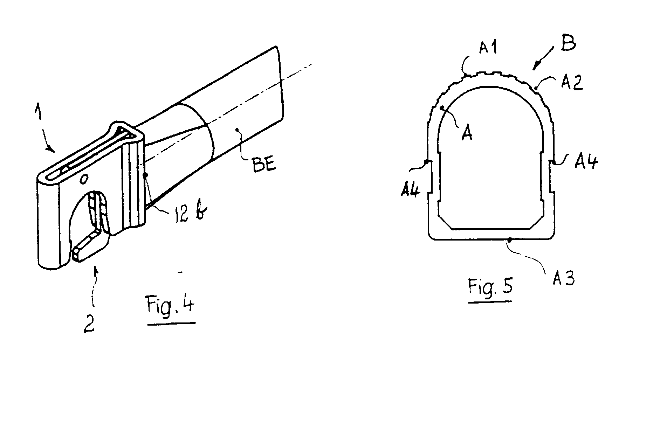

Ein erfindungsgemäßer Verbindungshaken besteht entsprechend den Fig. 1 bis 3 aus einem Hohlprofilstück 1 und einer Sicherungsklinke 2.Das stranggepreßte Hohlprofilstück 1 hat einen ungefähr T-förmigen Querschnitt 10, der sich im wesentlichen aus zwei flächenparallelen Stegen 11 und einem Gurtstreifen 12 zusammensetzt; die Stege 11 sind auf ihrer dem Gurtstreifen 12 gegenüberliegenden Seite miteinander werkstoffverbunden, so daß der Querschnitt 10 als geschlossenes Hohlprofil ausgebildet ist. In den Stegen 11 ist eine nach unten gerichtete Hakenöffnung 13 ausgenommen, die so bemessen ist, daß der Querschnitt A eines ebenfalls als Strangpreßprofil herstellbaren Bauteiles B (Fig. 5) überfangen werden kann. Dabei ist eine obere Kontur 13a der Hakenöffnung 13 so geformt, daß sie flächig auf einer entsprechenden, nach oben weisenden Kontur A1 des Bauteiles B aufliegt, wenn man von einigen die geschlossene Kontur A1 unterbrechenden Nuten A2 absieht, die an dem Beispiel des Bauteiles B zur Erhöhung der Trittsicherheit dienen, weil diese Bauteile B hier auch als Leitersprosse verwendet werden sollen. Die Wölbung der Kontur 13a ist zweckmäßig so bemessen, daß diese einen leichten Preßsitz mit dem Bauteil B auszubilden vermag. Das Bauteil B ist ortsfest an einem in der Zeichnung weggelassenen (zweiten) Bauelement angebracht.Der Gurtstreifen 12 ist breiter als die Gesamtbreite b (Fig. 3) der Stege 11 ausgeführt, auf diese Weise das Widerstandsmoment des Verbindungshakens erhöhend; gleichzeitig ist so eine relativ große Anlagefläche 12a entstanden, die an dem anzuschließenden ersten Bauelement BE (Fig. 4) anliegt und an diesem mit einer Schweißnaht befestigt ist, die hier einen Teil der Berandung 12b des Gurtstreifens 12 erfaßt, gegebenenfalls aber auch die komplette Berandung 12b. Die Anlagefläche 12a steht senkrecht auf den Flächen der Stege 11 und des Querschnitts 10 und ist hier eben ausgebildet; sie kann aber auch gewölbt sein, wenn nur die Berandung 12b, kantenförmig an dem Bauelement BE anliegend, mit diesem verschweißbar ist.

Zwischen den Stegen 11 ist die Sicherungsklinke 2 um eine an den Stegen 11 oberhalb der Hakenöffnung 13 ortsfeste Achse 14 (Fig. 2), beispielsweise einen Bolzen, schwenkbar und im übrigen als ebenes Blechstück ausgeformt und so mit einem einfachen Schnittwerkzeug problemlos herstellbar. Die ortsfeste Achse 14 ist der Längsachse des Bauteiles B parallel, so daß die Sicherungsklinke 2 in den Bereich der Hakenöffnung 13 einschwenkbar ist. An der Sicherungsklinke 2 ist eine keilförmige Klinkenkante 21 vorgesehen, die an einer Basisfläche A3 des Bauteiles B keilwirksam eine Haftreibungskraft erzeugt, wenn die Sicherungsklinke 2 im Uhrzeigersinn unter das von der Hakenöffnung 13 überfangene Bauteil B eingeschwenkt wird. Auf diese Weise ist zunächst das Bauteil B durch einen Klinkenbereich 20 formschlüssig mit dem Verbindungshaken verbunden, und dieser Formschluß wird durch den Reibschluß zwischen der Klinkenkante 21 und der Basisfläche A3 gesichert.

In den Fig. 1, 2 und 4 ist die Sicherungsklinke 2 etwa in der Lage gezeichnet, in der sie sich befindet, wenn das Bauteil B in der Hakenöffnung 13 sicher arretiert ist; eine Schlagkante 22 (Fig. 1) ist hierbei gerade bündig mit der Oberkante der Stege 11. Diese Schlagkante 22 ist sonst aber an den Stegen 11 überständig, so daß sie im Uhrzeigersinn in Schließrichtung S (Fig. 2) mit Hilfe eines Schlagwerkzeuges antreibbar ist. Eine weitere Schlagkante 23 dient der Demontage und kann zu diesem Zweck mit einem Schlagwerkzeug im Gegenuhrzeigersinn angetrieben werden.

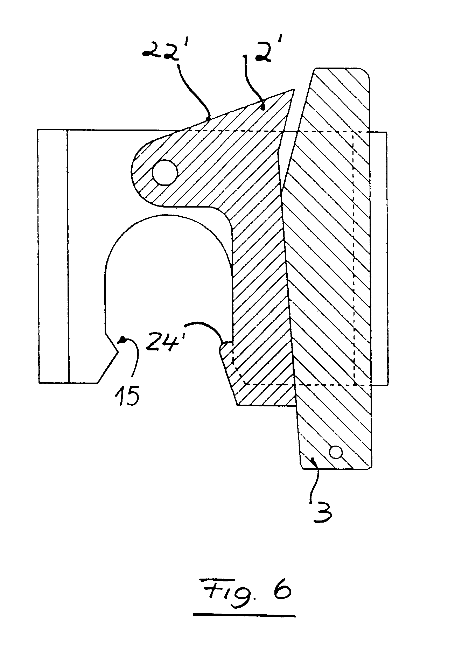

In der Fig. 6 ist eine etwas veränderte Ausführung im Grundschema skizziert. Die Sicherungsklinke 2' ist hier so ausgebildet, daß nicht die Basisfläche A3 des Bauteiles B unterfangen wird, sondern ein kurzer Bund A4 in etwa halber Höhe an dem Bauteil B, so daß anstelle des Klinkenbereiches 20 nur ein entsprechend kurzer Nocken 24' vorgesehen ist. Die symmetrisch beiderseits an dem Bauteil B befindliche Bünde A4 liegen demzufolge einerseits auf dem Nocken 24', und andererseits auf je einer Haltekante 15 auf, die an den beiden Stegen 11 ausgebildet ist. Unabhängig von den Ausgestaltung der Sicherungsklinke 2,2' erreicht man auf diese Weise, daß das Bauteil B in der Hakenöffnung 13 wie ein Träger auf zwei Stützen unterfangen ist: eine Stütze wird dabei von der Haltekante 15, die andere von der Klinkenkante 21 oder dem Nocken 24' gebildet.Die Sicherungsklinke 2' der Fig. 6 wird von einem Keil 3 angetrieben, der zwischen der Sicherungsklinke 2' und der (inneren) Anlagefläche des Gurtstreifens 12 einschlagbar ist und auf diese Weise wiederum den mittels der Hakenkante 15 bzw. dem Nocken 24' in Verbindung mit den Bünden A4 herbeigeführten Formschluß durch eine reibschlüssige Keilverbindung absichert. Der Keil 3 ist oben und unten an den Stegen 11 überständig, so daß er bequem eingeschlagen und auch wieder demontiert werden kann.

### Aufstellung der Bezugszeichen

- 1: Hohlprofilstück
- 10: Querschnitt
- 11: Steg
- 12: Gurtstreifen
- 12a: Anlagefläche
- 12b: Berandung
- 13: Hakenöffnung
- 13a: Kontur
- 14: Achse
- 15: Hakenkante
- 2,2': Sicherungsklinke
- 20: Klinkenbereich
- 21: Klinkenkante
- 22,22': Schlagkante
- 23: Schlagkante
- 24': Nocken
- 3: Keil

- b: Gesamtbreite
- A: Querschnitt
- A1: Kontur
- A2: Nut
- A3: Basisfläche
- A4: Bund
- B: Bauteil
- BE: Bauelement
- S: Schließrichtung

## Patentansprüche

1. Verbindungshaken zur lösbaren Verbindung zweier Bauelemente, wobei der an einem ersten Bauelement (BE) ortsfeste Verbindungshaken über ein profiliertes Bauteil (B) eines zweiten Bauelementes auflegbar ist, dieses Bauteil (B) teilweise überfangend und an diesem verriegelbar,
**dadurch gekennzeichnet, daß**
(a) der Verbindungshaken im Querschnitt (10) als Hohlprofilstück (1) ausgebildet ist,
(b) an dem Hohlprofilstück (1) zwei flache, flächenparallele Stege (11) vorgesehen sind, die, voneinander beabstandet, eine flache Sicherungsklinke (2) einschließen,
(c) die Sicherungsklinke (2) mit dem Bauteil (B) in einen Formschluß bringbar ist, wenn sie zwischen den Stegen (11) verschwenkt oder verschoben wird, den Querschnitt (A) des Bauteiles (B) in einer an den Stegen (11) ausgebildeten Hakenöffnung (13) arretierend, und
(d) die Stege (11) durch mindestens einen Gurtstreifen (12) verbunden sind und dieser so profiliert ist, daß er eine senkrecht auf dem Querschnitt (10) des Hohlprofilstükkes (1) und den Flächen der Stege (11) stehende Anlagefläche (12a) derart ausbildet, daß sie zur flanschartigen Befestigung des Verbindungshakens an dem ersten Bauelement (BE) geeignet ist.

2. Verbindungshaken nach Anspruch 1, dadurch gekennzeichnet, daß die Anlagefläche (12a) im wesentlichen eben gehalten ist.

3. Verbindungshaken nach Anspruch 2, dadurch gekennzeichnet, daß die Berandung (12b) der Anlagefläche (12a) mit dem ersten Bauelement (BE) verschweißbar ist.

4. Verbindungshaken nach einem der Ansprüche 1 bis 3, dadurch gekennzeichnet, daß die Anlagefläche (12a) im Querschnitt (10) des Hohlprofilstückes (1) als gegenüber dem übrigen Profil verbreiterte Gurtfläche erscheint.

5. Verbindungshaken nach einem der Ansprüche 1 bis 4, dadurch gekennzeichnet, daß der Formschluß der Sicherungsklinke (2) mit dem Bauteil (B) reibschlüssig arretierbar ist.

6. Verbindungshaken nach einem der Ansprüche 1 bis 5, dadurch gekennzeichnet, daß die Sicherungsklinke (2) um eine in den Stegen (11) ortsfeste Achse (14) schwenkbar ist, die der Längsachse des Bauteiles (B) parallel ist.

7. Verbindungshaken nach Anspruch 6, dadurch gekennzeichnet, daß an der Sicherungsklinke (2) eine keilförmige Klinkenkante (21) so ausgebildet ist, daß sie beim Verschwenken der Sicherungsklinke (2) den Querschnitt (A) des Bauteiles (B) in der Hakenöffnung (13) arretiert und in dieser Lage durch Keilwirkung einen Reibschluß zwischen der Klinkenkante (21) und einer Basisfläche (A3) des Bauteiles (B) erzeugt.

8. Verbindungshaken nach Anspruch 6, dadurch gekennzeichnet, daß an der Sicherungsklinke (2') eine kurzer Nocken (24') so ausgebildet ist, daß die Sicherungsklinke (2') beim Verschwenken den Querschnitt (A) des Bauteiles (B) in der Hakenöffnung (13) arretiert und selbst in dieser Lage durch einen zwischen der Sicherungsklinke (2) und der inneren Anlagefläche des Gurtstreifens (12) einschlagbaren Keil (3) reibschlüssig arretierbar ist.

9. Verbindungshaken nach einem der Ansprüche 1 bis 8, dadurch gekennzeichnet, daß an der Sicherungsklinke (2,2') eine Schlagkante (22,22') vorgesehen ist, an der die Sicherungsklinke (2,2') in ihrer Schließrichtung (S) antreibbar ist.

10. Verbindungshaken nach Anspruch 9, dadurch gekennzeichnet, daß die Schlagkante (22,22') an den Stegen (11) des Verbindungshakens überständig ist, solange die Bauelemente noch unverbunden sind.

11. Verbindungshaken nach einem der Ansprüche 7 bis 10, dadurch gekennzeichnet, daß mindestens eine weitere Schlagkante (23) an einem die Klinkenkante (21) enthaltenden Klinkenbereich (20) vorgesehen ist.

12. Verbindungshaken nach einem der Ansprüche 1 bis 11, dadurch gekennzeichnet, daß an der Hakenöffnung (13) eine der Sicherungsklinke (2,2') gegenüberliegende kurze Haltekante (15) vorgesehen ist, die einen weiteren Formschluß des Verbindungshakens mit dem Bauteil (B) ausbildet, wenn dieses von der Hakenöffnung (13) überfangen ist.

13. Verbindungshaken nach einem der Ansprüche 1 bis 12 in Verbindung mit einem Bauteil (B), dadurch gekennzeichnet, daß die Form der Hakenöffnung (13) der Form des Querschnitts (A) des Bauteiles (B) teilweise kongruent ist.

14. Verbindungshaken nach Anspruch 12 in Verbindung mit einem Bauteil (B), dadurch gekennzeichnet, daß die Hakenöffnung (13) so bemessen ist, daß die kongruenten Konturen (13a, A1) der Hakenöffnung (13) und des Bauteiles (B) mit einem leichten Preßsitz aneinanderliegen.

## Claims

1. A connecting hook to detachably connect two structural elements, the connecting hook fixedly arranged on a first structural element (BE) being able to be placed over a profiled member (B) of a second structural element while partially covering this member (B) and while being lockable thereto, characterised in that
(a) the connecting hook is a hollow section piece (1) in cross-section (10),
(b) two plane surface-parallel fillets (11) are provided on the hollow section piece (1) ) and, spaced apart from one another, enclose a plane securing catch (2),
(c) the securing catch (2) can be brought into a positive connection with the member (B) when pivoted or displaced between the fillets (11), locking the cross-section (A) of the member (B) in a hook opening (13) formed in the fillets (11), and
(d) the fillets (11) are connected by at least one flange strip (12) and the latter is profiled in such a manner that it forms a contact surface (12a) - perpendicular to the cross-section (10) of the hollow section piece (1) and to the surfaces of the fillets (11)- in such a manner that this contact surface (12a) is suitable for flange-like securing of the connecting hook to the first structural element (BE).

2. A connecting hook in accordance with Claim 1, characterised in that the contact surface (12a) is kept substantially plane.

3. A connecting hook in accordance with Claim 2, characterised in that the boundary (12b) of the contact surface (12a) is weldable to the first structural element (BE).

4. A connecting hook in accordance with any one of Claims 1 to 3, characterised in that the contact surface (12a) appears as a widened flange strip as compared with the remainder of the profile when the hollow section piece (1) is viewed in cross-section (10).

5. A connecting hook in accordance with any one of Claims 1 to 4, characterised in that the positive connection between the securing catch (2) and the member (B) is lockable in a friction-locking manner.

6. A connecting hook in accordance with any one of Claims 1 to 5, characterised in that the securing catch (2) is pivotable about a spindle (14) fixedly arranged in the fillets (11) which is parallel to the longitudinal axis of the member (B).

7. A connecting hook in accordance with Claim 6, characterised in that a wedge-shaped catch edge (21) is formed on the securing catch (2) in such a manner that upon pivoting of the securing catch (2), this catch edge (21) locks the cross-section (A) of the member (B) in the hook opening (13) and in this position produces a friction connection between the catch edge (21) and a base surface (A3) of the member (B) through the effect of the wedge.

8. A connecting hook in accordance with Claim 6, characterised in that a short dog (24') is formed on the securing catch (2') in such a manner that, upon pivoting, the securing catch (2') locks the cross-section (A) of the member (B) in the hook opening (13) and is itself lockable in this position in a friction-locking manner by a wedge (3) which can be driven-in between the securing catch (2) and the inner contact surface of the flange strip (12).

9. A connecting hook in accordance with any one of Claims 1 to 8, characterised in that a striking edge (22, 22') is provided on the securing catch (2, 2'), the securing catch (2, 2') being able to be pushed in its closing direction (S) through pressure on this striking edge (22, 22').

10. A connecting hook in accordance with Claim 9, characterised in that the striking edge (22, 22') projects beyond the fillets (11) of the connecting hook as long as the structural elements are still unconnected.

11. A connecting hook in accordance with any one of Claims 7 to 10, characterised in that at least one additional striking edge (23) is provided on a catch region (20) comprising the catch edge (21).

12. A connecting hook in accordance with any one of Claims 1 to 11, characterised in that a short supporting edge (15) facing the securing catch (2, 2') is provided at the hook opening (13), this supporting edge (15) forming an additional positive connection between the connecting hook and the member (B) when the latter is covered by the hook opening (13).

13. A connecting hook in accordance with any one of Claims 1 to 12 in conjunction with a member (B), characterised in that the form of the hook opening (13) is partially in congruency with the form of the cross-section (A) of the member (B).

14. A connecting hook in accordance with Claim 12 in conjunction with a member (B), characterised in that the hook opening (13) is dimensioned in such a manner that the congruent contours (13a, A1) of the hook opening (13) and the member (B) are in contact with one another with a slight force fit.

## Revendications

1. Crochet de liaison destiné à réaliser une liaison détachable entre deux éléments de construction, le crochet de liaison fixé à un premier élément de construction (BE) pouvant être posé par dessus une pièce de construction profilée (B) d'un deuxième élément de construction, en enfermant partiellement cette pièce de construction (B) et en pouvant être verrouillée à celle-ci,
caractérisé en ce que
a) le crochet de liaison est réalisé, en section (10), sous la forme d'une pièce (1) en profilé creux,
b) sur la pièce (1) en profilé creux, sont prévues deux flasques plats (11), ayant des surfaces parallèles, qui, placées à une certaine distance l'une de l'autre, enferment un cliquet de sécurité plat (2),
c) le cliquet de sécurité (2) peut être engagé avec la pièce de construction (B) pour former une liaison à conjugaison de formes, lorsqu'il pivote ou coulisse entre les flasques (11), bloquant la section (A) de la pièce de construction (B) dans une ouverture (13) du crochet, réalisée dans les flasques (11), et
d) les flasques (11) sont reliés par au moins une semelle (12) et cette dernière est profilée de manière à former une surface d'appui (12a) située perpendiculairement à la section (10) de la pièce en profilé creux (1) et aux surfaces des flasques (11), de façon que cette surface d'appui soit propre à réaliser une fixation, du genre à brides, du crochet de liaison sur le premier élément de construction (BE).

2. Crochet de liaison suivant la revendication 1, caractérisé en ce que la surface d'appui (12a) est essentiellement plane.

3. Crochet de liaison suivant la revendication 2, caractérisé en ce que la bordure (12b) de la surface d'appui (12a) peut être soudée au premier élément de construction (BE).

4. Crochet de liaison suivant l'une des revendications 1 à 3, caractérisé en ce que la surface d'appui (12a), dans la section (10) de la pièce en profilé creux (1), se présente sous la forme d'une semelle élargie par rapport au reste du profilé.

5. Crochet de liaison suivant l'une des revendications 1 à 4, caractérisé en ce que la liaison à conjugaison de formes du cliquet de sécurité (2) avec la pièce de construction (B) peut être bloquée par friction.

6. Crochet de liaison suivant l'une des revendications 1 à 5, caractérisé en ce que le cliquet de sécurité (2) peut pivoter autour d'un axe fixe (14), dans les flasques (11) et est parallèle à l'axe longitudinal de la pièce de construction (B) .

7. Crochet de liaison suivant la revendication 6, caractérisé en ce que, sur le cliquet de sécurité (2), est réalisée une arête de cliquet (21) en forme de coin, de telle façon que, lors du pivotement du cliquet de sécurité (2), elle bloque la section (A) de la pièce de construction (B) dans l'ouverture (13) du crochet et, dans cette position, par effet de coin, crée une liaison par friction entre l'arête (21) du cliquet et une surface de base (A3) de la pièce de construction (B).

8. Crochet de liaison suivant la revendication 6, caractérisé en ce que, sur le cliquet de sécurité (2'), est réalisée une courte saillie (24'), de telle façon que le cliquet de sécurité (2'), lors du pivotement, bloque la section (A) de la pièce de construction (B) dans l'ouverture (13) du crochet et peut lui-même, dans cette position, être bloquée grâce à une liaison par friction, par un coin (3) pouvant être inserré entre le cliquet de sécurité (2') et la surface d'appui intérieure de la semelle (12).

9. Crochet de liaison suivant l'une des revendications 1 à 8, caractérisé en ce que, sur le cliquet de sécurité (2, 2'), est prévue une arête de butée (22, 22') par laquelle le cliquet de sécurité (2, 2') peut être entraîné, dans son sens de fermeture (S).

10. Crochet de liaison suivant la revendication 9, caractérisé en ce que l'arête de butée (22, 22') fait saillie sur les flasques (11) du crochet de liaison tant que les éléments de construction ne sont pas encore raccordés.

11. Crochet de liaison suivant l'une des revendications 7 à 10, caractérisé en ce qu'il est prévu au moins une autre arête de butée (23) dans une zone (20) comportant l'arête (21) du cliquet.

12. Crochet de liaison suivant l'une des revendications 1 à 11, caractérisé en ce que, sur l'ouverture (13) du crochet, il est prévu une courte arête de retenue (15) située vis-à-vis du cliquet de sécurité (2, 2') et formant une autre liaison par conjugaison de formes du crochet de liaison avec la pièce de construction (B), quand cette dernière est engagée dans l'ouverture (13) du crochet.

13. Crochet de liaison suivant l'une des revendications 1 à 12, en liaison avec une pièce de construction (B), caractérisé en ce que la forme de l'ouverture (13) du crochet est, en partie, congruente avec la forme de la section (A) de la pièce de construction (B).

14. Crochet de liaison suivant la revendication 12, en liaison avec une pièce de construction (B), caractérisé en ce que l'ouverture (13) du crochet est dimensionnée de telle façon que les contours congruents (13a, A1) de l'ouverture (13) du crochet et de la pièce de construction (B) sont en contact, l'un avec l'autre, avec un léger ajustage serré.
